# EUROPEAN PATENT SPECIFICATION

(11) **EP 2 185 354 B1**
(45) Date of publication and mention of the grant of the patent: **26.03.2014**
(21) Application number: 08807015.6
(22) Date of filing: 05.09.2008
(51) Int. Cl.: B32B 5/22

(54) **COVERING MATERIAL**
ABDECKMATERIAL
MATÉRIAU DE REVÊTEMENT

(30) Priority: 07.09.2007 BE 200700439
(43) Date of publication of application: 19.05.2010
(73) Proprietor: Bekaert Textiles N.V., 8790 Waregem (BE)
(72) Inventor: DE MEULEMEESTER, Paul, B-8793 Sint-Eloois-Vijve (BE)
(74) Representative: Laenen, Bart Roger Albert
(86) International application number: PCT/IB2008/002324
(87) International publication number: WO 2009/031028

(56) References cited:
- WO-A1-2005/113232
- WO-A2-2007/092678
- US-A- 4 045 609

## Description

The present invention relates to a covering material comprising a first layer and a second layer, in which the first layer and the second layer are joined together. The covering material of the present invention can, inter alia, be used as covering for a mattress, as covering for a mattress protector, or as a sleeve for a mattress, without the possible applications of the present invention being limited thereto.

Covering materials have been known for a considerable time and are used for many different applications. One known covering material is composed of two layers, the first layer being made of flat knitwear to which a waterproof polyurethane coating (second layer) is applied. In this embodiment, the flat knitwear is the support layer, as it were, for the polyurethane coating which is intended, on the one hand, to prevent water from penetrating the covering material and, on the other hand, allow a limited amount of water vapour through. The water vapour permeability of this covering material is approximately 1000 g/m²/24h, measured at 37.8°C using ASTM-E96-66. The polyurethane coating can be dyed in accordance with the customer's wishes. In use, the coated side of the covering material is usually the visible side, as this shows the colour of the coating at its best and would otherwise be covered by the flat knitwear.

The first drawback of the above covering material is the unpleasant "plastic-like" feeling experienced when touching the material. A second drawback is the fact that this covering material is relatively thin (< 0.5 mm) and has no compressible or resilient properties, so that when a force is exerted on this material for a relatively long period of time by for example an object, a human being or an animal, the material generates insufficient pressure relief on this object, or this person or this animal, as a result of which there is a great risk for this person or this animal suffering pressure injuries.

A third drawback of the above-mentioned covering material is the fact that the aesthetic (appearance) of the material can only be changed to a limited degree, as the waterproof coating which is to be applied is limited to only one colour.

A fourth drawback of this known covering material is the reduced use comfort when water or another liquid ends up on the coated side of the covering material, as the liquids will remain on the covering material until they evaporate naturally or until they are physically removed from the material by means of, for example, a sponge or cloth.

A fifth drawback is the fact that heat and moisture, originating for example from the human body, cannot readily be transported away by means of such a covering material as the coating layer prevents this, resulting in the drawback that the user lies in his or her own sweat.

A number of solutions are already known for solving one or more of the above-mentioned. Thus, the aesthetic aspect of the covering material could be improved by providing the coated side of the covering material with a design or pattern by means of printing. However, the possibilities for doing this are too limited as there are presently few if any suitable dyes available on the market to dye a polyurethane coating after it has been applied to a support material. In addition, the dyes will be of insufficient fastness. However, if this solution was possible, then this would not result in any added value as it only solves the aesthetic aspect and offers no solution for the other drawbacks.

It would also be possible to provide the covering material with an additional layer with aesthetic properties such as, for example, a flat fabric consisting of soft yarns and provided with a design. This would solve the aesthetic aspect and also solve the plastic-like feeling of the coating layer. However, the heat- and moisture-distributing capability of the covering material is in this case limited, since the moisture (in the case of large amounts thereof) would quickly saturate the fabric. Also, there is insufficient pressure relief when such a flat fabric is applied.

Applying a strongly absorbent layer on the covering material could also make it possible to remove excess quantities of liquid from the covering more efficiently, but this will become saturated over time. The intention is for liquids not to remain on the top side of the covering material. The moisture has to be removed in a natural manner, without external intervention and without taking excessively long, so that this moisture no longer bothers the user of the covering material.

Furthermore, German patent publication DE 197 36 951 A1 discloses a covering material for covering vehicle seats. The covering material described therein comprises a spacer knitwear which is permeable to air on one side and impermeable to air on the other side in order to keep the heating-up effect of the seat in the vehicle as high as possible. The covering material described in DE 197 36 951 has the drawback that it will not be able to dissipate the heat sufficiently (originating from, for example, a human body).

European patent application EP 1 391 283 A1 describes a covering material consisting of a decorative layer, a first and a second foam layer. However, such a covering material is also not suitable for solving the above-mentioned drawbacks either.

Finally, US patent 4,045,609 discloses a gas resistant foam material for clothing which essentially consists of a foam material and a backing fabric. This backing fabric can be woven or knitted and may also be a nonwoven in the form of a netting or scrim. Such materials are insufficiently water-impermeable, expressed in the number of metres or millimetres of water column. The foam material is joined to the backing fabric by means of a lamination process in order thus to form a reinforcing fabric. Said reinforcing fabric should be freely permeable to air, so that the permeability of the laminated combination is not much lower than the permeability of the porous material, being the foam material. As the foam material described in US 4,045,609 is water - and therefore also liquid-permeable, the reinforcing fabric per se also has to be sufficiently water-permeable in order not to affect the permeability of the entire laminate compared to the permeability of the foam material. As a result, such a material is not suitable to prevent water or other liquids from passing therethrough.

Also, in example 12 of US 4,045,609, a possible variant of the gas resistant foam material for clothing is mentioned, in which a third layer is attached to the foam material. This additional layer may be a woven or a knitted material and may also be a nonwoven.

Such an embodiment does not sufficiently prevent liquids from penetrating through the material either, due to the typical characteristics of a fabric, knitwear or nonwoven which are too porous. Even treating this material with a water-repellent and/or oil-repellent product will not make it sufficiently water-impermeable. The material then is liquid-repellent, but not liquid-proof.

It is an object of the invention to provide a covering material which does not have the above-mentioned drawbacks and in which the covering material has sufficient breathability.

The object of the invention is achieved by providing a covering material comprising a first layer and a second layer according to claim 1 in which the first layer and the second layer are joined together, and in which the first layer consists of a spacer knitwear (e.g. double jersey), a spacer fabric or a foam material which is permeable to water and water vapour, and the second layer is water-impermeable and water vapour permeable. The advantage thereof is that water cannot penetrate through the covering material, while water vapour can pass through the covering material. If this covering material is, for example, used as covering for a mattress, water cannot penetrate to the filling of the mattress (mattress core), as a result of which the risk of moulds and bacteria forming is reduced. Due to a higher water vapour permeability, the covering material has an improved breathability which also promotes the reduction in the formation of moulds and bacteria.

According to a preferred embodiment of the invention, the second layer is made from polyurethane. In a more preferred embodiment, the second layer is a water-impermeable and water vapour permeable polyester film or polyester coating which has the advantage that the ultimate covering material does not shine excessively on that side on which the film or coating is applied, thus not excessively affecting the original appearance of the first layer as a result of the higher natural gloss of the polyurethane material.

The water vapour permeability of the first and second layer is greater than 1250 g/m²/24h. The water vapour permeability of the first and the second layer of the covering material is measured at 37.8°C using the ASTM-E96-66 standard. In particular, the water vapour permeability of the first and second layer is greater than 3000 g/m²/24h, more particularly greater than 5000 g/m²/24h and most particularly the water vapour permeability of the first and second layer is greater than 10 000 g/m²/24h.

The water-impermeability of the second layer is greater than 2000 mm of water column. The water-impermeability of the second layer of the covering material is measured using the ISO 140 standard. The covering material has a water-impermeability of more than 5000 mm of water column and in a preferred embodiment more than 10 000 mm.

In a first embodiment of the covering material according to the invention, the spacer knitwear or spacer fabric comprises a first and a second yam layer, with both layers being joined together by means of filament yarns. Preferably, the filament yarns consist of monofilaments, multifilaments or a combination of both. The multifilament yam may also be coated in order to simulate a monofilament. The advantage when using a spacer knitwear or spacer fabric is the higher comfort for the person who or the animal which is lying on this covering due to the ideal pressure relief. This is due to the highly resilient three-dimensional structure which creates a functional layer of air resulting in several advantages for maximizing the comfort while lying down.

The air layer between the spacer knitwear or spacer fabrics acts as a breathing layer which combines pressure relief, thermo-regulating and moisture-regulating properties. This air layer will immediately act as a buffer for absorbing moisture or other liquids and will thus spread the moisture more effectively across the surface of the covering material, as a result of which it is removed more quickly through evaporation. Heat from the body of living creatures, such as human beings and animals, will also be dissipated from the body more effectively as the air layer acts as a transport layer for both moisture and heat. When the covering material is air-dried, it will dry more quickly and contain less residual moisture then when knitwear is used without air layer, as is the case with the known covering materials.

The filament yarns (situated between both layers) have a thickness of between 10 and 1500 denier, in particular the filament yarns have a thickness between 20 and 1200 denier and most particularly the filament yarns have a thickness between 50 and 900 denier.

In one particular embodiment of the covering material according to the invention, a design consisting of one or several colours is worked into at least one yam layer of the spacer knitwear or spacer fabric. This offers many possibilities for changing the aesthetic appearance of the covering material. In particular, the design is manufactured according to a Jacquard technique.

In a second embodiment of the covering material according to the invention, the first layer is a foam material. The foam material has a density of at most 200 kg/m³. In particular, the foam material has a density of at most 150 kg/m³, more particularly the foam material has a density of at most 100 kg/m³ and most particularly the foam material has a density of at most 70 kg/m³.

In the covering material according to the present invention, the foam material has a hardness of at most 20 kPa. In particular, the foam material has a hardness of at most 15 kPa, more particularly the foam material has a hardness of at most 10 kPa and most particularly the foam material has a hardness of at most 8 kPa. The lower the hardness, the more resilient the material.

The foam material is an aerogel foam.

The thickness of the covering material is substantially determined by the thickness of the first layer and is mainly selected depending on the desired degree of pressure relief and liquid-absorbent capability. The thicker the first layer of the covering material, the higher the pressure relief for the user of the covering material and the higher the liquid-absorbent capability. However, it is not only the thickness of the first layer of the covering material that plays a part; the density and the hardness are also important, as described above. The first layer has a thickness of between 1 and 100 mm. In particular, the first layer has a thickness of between 2 and 60 mm. More particularly, the first layer has a thickness of between 3 and 20 mm.

According to a particular embodiment of the covering material according to the invention, the second layer is applied to the first layer by means of a coating technique. In a preferred embodiment of the covering material, the first layer and the second layer are joined together by means of a lamination process. In this case, the second layer is then preferably applied in the shape (form) of a premanufactured film. This offers the advantage that no solvents are required when applying the second layer, while this is usually the case when coating. In this way, the first and second layer can be joined to one another by means of a powder coating or a hot melt coating.

In another embodiment of the covering material according to the invention, a decorative layer is provided which is made from a fabric, a knitwear or a nonwoven, with the first layer being situated between the second and the decorative layer and being joined to both layers. This offers the advantage that materials such as fabrics, knitwear or nonwovens from the existing collection of fabrics can be incorporated without a problem in the covering material according to the present invention. In this case, the spacer knitwear or spacer fabric is not provided with a design in at least one of its layers and the decorative layer has the same aesthetic function as the spacer knitwear or spacer fabric, as the technical possibilities for working certain designs into the spacer knitwear or spacer fabric in at least one of the yarn layers of this spacer knitwear or spacer fabrics are limited. Certain effects can only be produced if a fabric is used as a decorative layer. This embodiment is also interesting if a foam material is used as first layer, since in this case no design can be incorporated when producing this foam material. The foam material would have to be provided with a design afterwards, for example by printing it, which is disadvantageous for the cost price and for the time which is required for producing the covering material as this entails an additional operation. Preferably, the decorative layer is permeable to water and water vapour.

According to a particular embodiment, the first layer and the decorative layer are joined together by means of a lamination process. The lamination process is carried out by means of powder coating or hot melt coating.

In a most particular embodiment of the covering material according to the invention, the decorative layer is provided with a design on at least one side. Preferably, said design is applied by means of a Jacquard technique or by means of printing.

In a particularly advantageous embodiment of the covering material according to the present invention, the decorative layer is made from knitwear produced on a circular knitting machine according to the principle of weft knitting.

The present invention will now be explained in more detail with reference to the following detailed description of some embodiments of the covering material according to the present invention. The aim of this description and these examples is solely to illustrate and indicate further advantages and particulars of these coverings according to the invention and should therefore in no way be seen as limiting the area of application of the invention or of the patent rights claimed in the claims.

In this detailed description, reference numerals are used to refer to the attached drawings, in which:
- Fig. 1: shows a diagrammatic representation of a first embodiment of the covering material according to the present invention consisting of a first layer and a second layer, in which the first layer and the second layer are joined to one another;
- Fig. 2: shows a diagrammatic representation of a second embodiment of the covering material according to the invention, in which the covering material from Fig. 1 is provided with a decorative layer.

The covering material (4) according to the invention and as illustrated in the attached figures can be used for numerous applications. Examples of areas of application are: covering for a mattress, covering for a mattress protector, or as a sleeve for a mattress.

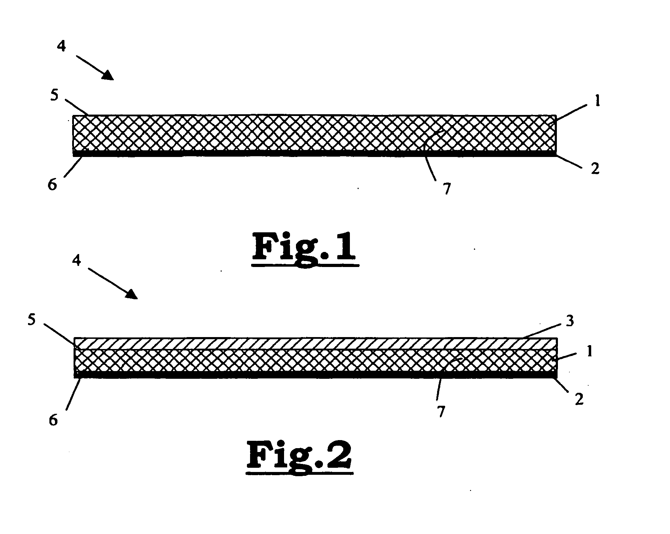

The covering material (4) according to the invention is composed of a first layer (1) and a second layer (2) which are joined together, the first layer (1) consisting of a spacer knitwear, a spacer fabric or a foam material which is permeable to water and water vapour, and the second layer (2) being water-impermeable and water vapour-permeable. In the attached Figs. 1 and 2, a covering material (4) is illustrated in each case, in which the first layer is a spacer fabric or spacer knitwear. The first layer (1) is compressible and has resilient properties.

Furthermore, a decorative layer (3) may be provided which consists of a fabric, a knitwear or a nonwoven, in which the first layer (1) is situated between the second (2) and the decorative layer (3) and is connected to both layers (2 and 3). Like the first layer, the decorative layer (3) is also permeable to water and water vapour.

By providing the decorative layer (3), the appearance of the covering material (4) can be modified to suit the wishes of the customer.

The layers (1, 2 and 3) are preferably joined together by means of a lamination process. Obviously, other techniques by means of which the various layers can be joined together are also possible. For laminating the various layers together, use is made of a powder coating or a hot melt coating or a film coating which is permeable to water and water vapour (e.g. a perforated film).

The first layer (1) comprises a spacer knitwear, a spacer fabric or a foam material. As is clear from the figures, the spacer knitwear or spacer fabric comprises a first (5) and a second (6) yarn layer, both layers (5, 6) being joined together by means of filament yarns (7). Continuous and textured monofilament and/or multifilament yarns (7) having a thickness of between 10 and 1500 denier are used for this spacer knitwear and/or spacer fabric.

If the first layer (1) consists of a foam material, an aerogel foam (air-filled silicon) is used. The foam material used has a density of at most 200 kg/m³ and a hardness of at most 20 kPa.

The thickness of the first layer (1) depends on the application/wishes of the customer, but is between 1 and 100 mm.

Preferably, the second layer (2) is a polyurethane layer which is applied as a coating on the spacer knitwear, the spacer fabric or the foam material. According to the present invention, this second layer (2) is impermeable to water (and other liquids, such as for example urine and sweat), but does allow water vapour through. The water vapour permeability of this second layer is preferably greater than 1250 g/m²/24h, measured using the ASTM-E96-66 standard at 37.8°C. The water-impermeability of the second layer is greater than 2000 mm of water column, measured using the ISO 140 standard.

The second layer has a thickness of between 0.1 and 50 µm. In particular, the second layer has a thickness of between 0.1 and 40 µm. More particularly of between 0.1 and 30 µm and most particularly of between 0.1 and 20 µm. In a particularly preferred embodiment, the second layer has a thickness of 0.1 to 15 µm and in a more particularly preferred embodiment has a thickness of 0.1 to 10 µm.

Below, two examples of other covering materials are given:

### Example 1:

- first layer (1): spacer knitwear with a weight of 395 g/m² comprising polyester monofilaments having a thickness of 100 denier between the two yarn layers (5 and 6). The two yarn layers contain yarns made of polyester and viscose and on the side opposite this one to which layer (2) is applied, a two-coloured design is worked in.
- second layer (2): polyurethane film having a thickness of 12 µm which is laminated to the first layer (1) by means of a hot melt dot coating (spot-bonding).

### Properties:

- total thickness of the covering material: 4 mm;
- water-impermeability: 2300 mm of water column (ISO 140);
- water vapour permeability: 12 000 g/m²/24h (ASTM-E96-66 at 37.8°C)

### Example 2:

- first layer (1): spacer knitwear with a weight of 380 g/m² comprising polyester monofilaments having a thickness of 100 denier between the two yam layers. The two yam layers contain yarns made of polyester without any design being worked into one of the yam layers of the spacer knitwear.
- second layer (2): polyurethane film having a thickness of 12 µm which is laminated to layer (1) by means of hot melt dot coating (spot-bonding);
- third layer (3): knitwear of a weight of 275 g/m² made of 100% polyester with a design being worked into the side opposite that to which the first layer (1) is applied. Joining layer (1) and layer (3) together is achieved through lamination by means of powder-coating.

### Properties:

- total thickness of the covering material: 6 mm
- water-impermeability: 2300 mm of water column (ISO 140)
- water vapour permeability: 10 000 g/m²/24h (ASTM-E96-66 at 37.8°C)

The covering materials from these examples ensure that a covering material (4) is produced which has sufficient pressure relief, which is due to the spacer knitwear. In addition, the possibilities for adding various designs by means of the spacer knitwear (1) or by means of the decorative layer (3) are greatly increased. The functional air layer of the spacer knitwear (1) ensures that the excessive amounts of liquid are absorbed in this layer and this layer increases the moisture- and heat-distributing capability. As a result thereof, the drying time is reduced and less residual moisture is present in the covering material (4) when the covering material (4) is air-dried. Large amounts of moisture will therefore not inconvenience the user as this moisture will penetrate the air layer of the spacer knitwear and thus increase the comfort of the user while lying down.

## Claims

1. Covering material (4) comprising a first layer (1) and a second layer (2), in which the first layer (1) and the second layer (2) are joined together, **characterized in that** the first layer (1) consists of a spacer knitwear, a spacer fabric or a foam material which is permeable to water and water vapour, and **in that** the second layer (2) is water-impermeable and water vapour permeable, wherein the water vapour permeability of the first and second layer of said covering material is greater than 1250 g/m²/24h (ASTM-E96-66, measured at 37.8 °C), said covering material has a water-impermeability measured using the ISO140 Standard greater than 5000 mm of water column, and **characterized in that**;
- the spacer knitwear or spacer fabric comprises a first (4) and a second yarn layer (5), with both layers (5 and 6) being joined together by means of filament yarns (7), having a thickness between 10 and 1500 denier
- the foam material is an aerogel foam, having a density of at most 200 Kg/m³;
- the water-impermeability measured using the ISO140 Standard of the second layer is greater than 2000 mm of water column; and
- the first layer (1) has a thickness of between 1 and 100 mm.

2. Covering material (4) according to Claim 1, **characterized in that** the filament yarns (7) consist of monofilaments, multifilaments or a combination of both.

3. Covering material (4) according to Claim 1 or 2, **characterized in that** a design consisting of one or several colours is worked into at least one yam layer (5,6).

4. Covering material (4) according to Claim 1, **characterized in that** the foam material has a hardness of at most 20 kPa.

5. Covering material (4) according to one of the preceding claims, **characterized in that** the first layer (1) has a thickness of between 3 and 20 mm.

6. Covering material (4) according to one of the preceding claims, **characterized in that** the second layer (2) has a thickness of between 0.1 µm and 50 µm.

7. Covering material (3) according to one of the preceding claims, **characterized in that** the second layer (2) is applied to the first layer by means of a coating technique.

8. Covering material (4) according to one of Claims 1 to 7, **characterized in that** the first layer (1) and the second layer (2) are joined together by means of a lamination process.

9. Covering material (4) according to one of the preceding claims, **characterized in that** a decorative layer (3) is provided which is made from a fabric, a knitwear or a nonwoven, with the first layer (1) being situated between the second (2) and the decorative layer (3) and being joined to both layers (2 and 3).

10. Covering material (4) according to Claim 9, **characterized in that** the decorative layer (3) is permeable to water and water vapour.

11. Covering material (4) according to Claim 9 or 10, **characterized in that** the first layer (1) and the decorative layer (3) are joined together by means of a lamination process.

12. Covering material (4) according to one of Claims 9 to 11, **characterized in that** the decorative layer (3) is provided with a design on at least one side.

13. Covering material (4) according to one of Claims 9 to 12, **characterized in that** the decorative layer (3) is made from knitwear produced on a circular knitting machine according to the principle of weft knitting.

## Patentansprüche

1. Es sich um ein Abdeckmaterial (4) handelt, welches aus einer ersten Schicht (1) und einer zweiten Schicht (2) besteht, und bei dem die erste Schicht (1) und die zweite Schicht (2) miteinander verbunden werden und **dadurch gekennzeichnet ist, dass** die erste Schicht (1) entweder aus einem Abstandshalter für Strickwaren besteht, einem Abstandsgewebe oder einem Schaummaterial, das durchlässig für Wasser und Wasserdampf ist, und bei dem die zweite Schicht (2) durchlässig für Wasser und Wasserdampf ist, wobei die Wasserdampfdurchlässigkeit der ersten und der zweiten Schicht des beschriebenen Abdeckmaterials mehr als 1250 g/m2/24h beträgt (ASTM - E96- 66, gemessen bei 37,8°C), wobei das Abdeckmaterial eine Wasserdichtigkeit gemessen nach dem ISO140 Standard hat, welche mehr als 5000 mm Wassersäule beträgt und **dadurch gekennzeichnet ist, dass** ;
- Der Abstandshalter für Strickwaren oder das Abstandsgewebe eine erste (4) und eine zweite Fadenschicht (5) enthält, wobei beide Schichten (5 und 6) durch Filamentgarne miteinander verbunden sind (7), welche eine Dicke zwischen 10 und 1500 Denier aufweisen
- Der Schaumstoff aus einem Aerogel -Schaum mit einer Dichte von höchstens 200 kg/m3 besteht;
- Die Wasserundurchlässigkeit der zweiten Schicht, gemessen unter Verwendung des ISO 140 - Standards, mehr als 2000 mm Wassersäule beträgt und
- Die erste Schicht (1) eine Dicke zwischen 1 und 100 mm aufweist.

2. Es sich um ein Abdeckmaterial (4) gemäß Anspruch 1 handelt, welches **dadurch gekennzeichnet ist, dass** die Filamentgarne (7) aus Monofilamenten, Multifilamenten oder eine Kombination beider aufweist.

3. Es sich um ein Abdeckmaterial (4) gemäß den Ansprüchen 1 oder 2 handelt, welches **dadurch gekennzeichnet ist, dass** ein Muster aus einer oder mehreren Farben in wenigstens einer Fadenschicht (5, 6) eingearbeitet ist.

4. Es sich um ein Abdeckmaterial (4) gemäß Anspruch 1 handelt, welches **dadurch gekennzeichnet ist, dass** der Schaum eine Härte von höchstens 20 kPa aufweist.

5. Es sich um ein Abdeckmaterial (4) gemäß einem der vorhergehenden Ansprüche handelt, welches **dadurch gekennzeichnet ist, dass** die erste Schicht (1) eine Dicke zwischen 3 und 20 mm aufweist.

6. Es sich um ein Abdeckmaterial (4) gemäß einem der vorhergehenden Ansprüche handelt, welches **dadurch gekennzeichnet ist, dass** die zweite Schicht (2) eine Dicke zwischen 0,1 um und 50 um aufweist.

7. Es sich um ein Abdeckmaterial (3) gemäß einem der vorhergehenden Ansprüche handelt, welches **dadurch gekennzeichnet ist, dass** die zweite Schicht (2) auf die erste Schicht mittels einer Beschichtung aufgebracht wurde.

8. Es sich um ein Abdeckmaterial (4) gemäß einem der Ansprüche 1 bis 7 handelt, welches **dadurch gekennzeichnet ist, dass** die erste Schicht (1) und die zweite Schicht (2) durch ein Laminierverfahren miteinander verbunden sind.

9. Es sich um ein Abdeckmaterial (4) gemäß einem der vorhergehenden Ansprüche handelt, welches **dadurch gekennzeichnet ist, dass** eine dekorative Schicht (3) vorgesehen ist, die aus einem Gewebe, einer Maschenware oder einem Vliesstoff hergestellt ist, bei der die erste Schicht (1) zwischen der zweiten (2) und der Dekorschicht (3) angeordnet und mit beiden Schichten (2 und 3) verbunden ist.

10. Es sich um ein Abdeckmaterial (4) gemäß Anspruch 9 handelt, welches **dadurch gekennzeichnet ist, dass** die Dekorschicht (3) eine Durchlässigkeit für Wasser und Wasserdampf aufweist.

11. Es sich um ein Abdeckmaterial (4) gemäß den Ansprüchen 9 oder 10 handelt, welches **dadurch gekennzeichnet ist, dass** die erste Schicht (1) und die Dekorschicht (3) durch eine Laminierung miteinander verbunden sind.

12. Es sich um ein Abdeckmaterial (4) gemäß einem der Ansprüche 9 bis 11 handelt, welches **dadurch gekennzeichnet ist, dass** die Dekorschicht (3) mit einem Design auf mindestens einer Seite versehen ist.

13. Es sich um ein Abdeckmaterial (4) gemäß einem der Ansprüche 9 bis 12 handelt, welches **dadurch gekennzeichnet ist, dass** die Dekorschicht (3) aus Strickwaren besteht und auf einer Rundstrickmaschine nach dem Prinzip der Strickmaschinenherstellung verarbeitet ist.

## Revendications

1. Matériau de revêtement (4) comprenant une première couche (1) et une deuxième couche (2), dans lequel la première couche (1) et la deuxième couche (2) sont assemblées, **caractérisé par le fait que** la première couche (1) consiste en un tissu formé de deux couches, un tissu d'espacement ou bien un matériau alvéolaire qui est perméable à l'eau et à la vapeur d'eau , et que la deuxième couche (2) est imperméable à l'eau est perméable à la vapeur d'eau , où la perméabilité de la vapeur d'eau de la première et la deuxième couche dudit matériau de revêtement est supérieure à 1250 g/m²/24h (ASTM-E96-66, mesurée à 37,8 °C), ledit matériau de revêtement possède une imperméabilité à l'eau mesurée en utilisant la norme ISO140, supérieure à 5000 mm de la colonne d'eau, est **caractérisée par le fait que** ;
- le tissu formé de 2 couches ou bien le tissu d'espacement comprend une première (4) et une seconde couche de fils (5), avec deux couches (5 et 6) étant assemblées au moyen de fils continus (7), avec une épaisseur entre 10 et 1500 deniers
- le matériau alvéolaire est une mousse aérogel, ayant une densité de plus de 200 kg/m³;
- la perméabilité à l'eau mesurée en utilisant la norme ISO140, de la seconde couche est supérieure à 2000 mm de la colonne d'eau; et
- la première couche (1) à une épaisseur entre 1 et 100 mm.

2. Le matériau de revêtement (4) conformément à la revendication 1, **caractérisé par le fait que** les couches de fils (7) consistent en des monofilaments, multifilaments ou un mélange des deux.

3. Le matériau de revêtement (4) conformément à la réclamation 1 ou 2, **caractérisé par** un design consistant en une ou plusieurs couleurs travaillées au moins dans une des couches de fils (5, 6).

4. Un matériau de revêtement (4) conformément à la réclamation 1, **caractérisé par le fait que** le matériel de la mousse possède une dureté de plus de 20 kPa.

5. Un matériau de revêtement (4) conformément à l'une des revendications précédentes, **caractérisé par le fait que** la première couche (1) possède une épaisseur de 3 à 20 mm.

6. Un matériau de revêtement (4) conformément à l'une des revendications précédentes, **caractérisé par le fait que** la deuxième couche (2) possède une épaisseur de 0.1 µm à 50 µm.

7. Un matériau de revêtement (3) conformément à l'une des revendications précédentes, **caractérisé par le fait que** la deuxième couche (2) est appliquée à la première couche au moyen d'une technique d'enduction.

8. Un matériau de revêtement (4) conformément à l'une des revendications 1 à 7, **caractérisé par le fait que** la première couche (1) et la deuxième couche (2) sont assemblées au moyen d'un processus de laminage.

9. Un matériau de revêtement (4) conformément à l'une des revendications précédentes, **caractérisé par le fait qu'**une couche décorative (3) est fournie et fabriquée en tissu, en tricot ou avec un tissu non-tissé, avec la première couche (1) en étant située entre la deuxième (2) et la couche décorative (3) et étant assemblée aux deux couches (2 and 3).

10. Un matériau de revêtement (4) conformément à la réclamation 9, **caractérisée par le fait que** la couche décorative (3) est imperméable à l'eau et à la vapeur d'eau.

11. Un matériau de revêtement (4) conformément aux réclamations 9 ou 10, **caractérisé par le fait que** la première couche (1) et la couche décorative (3) sont assemblées au moyen d'un processus de laminage.

12. Un matériau de revêtement (4) conformément à l'une des revendications 9 ou 11, **caractérisé par le fait que** la couche décorative (3) est fournie avec un design au moins sur un côté.

13. Un matériau de revêtement (4) conformément à l'une des revendications 9 à 12, **caractérisée par le fait que** la couche décorative (3), est faite en tricot produit par une machine à tricoter circulaire conformément au principe du tricot trame.
